# EUROPÄISCHE PATENTANMELDUNG

(11) **EP 4 174 190 A1**
(43) Veröffentlichungstag der Anmeldung: **03.05.2023**
(21) Anmeldenummer: 21204848.2
(22) Anmeldetag: 26.10.2021
(51) Int. Cl.: C21D 1/18, B21D 22/00, B21D 28/00, B21D 28/02, B21D 28/24, B21D 43/00, C21D 1/19, C21D 1/673, C21D 7/02, C21D 7/13, C21D 8/02, C21D 8/04, C21D 9/48, B21D 35/00, B23K 26/00

(54) **VERFAHREN ZUR HERSTELLUNG EINES KRAFTFAHRZEUG-FORMBAUTEILS**

(71) Anmelder: Benteler Automobiltechnik GmbH, 33102 Paderborn (DE)
(72) Erfinder: Wesling-Schaefers, Markus, 59590 Geseke (DE)
(74) Vertreter: Ksoll, Peter

(57) **Zusammenfassung**

Die Erfindung betrifft ein Verfahren zur Herstellung eines zumindest partiell gehärteten Kraftfahrzeug-Formbauteils aus einer Platine aus einer härtbaren Stahllegierung, wobei das Kraftfahrzeug-Formbauteil mehrere Löcher aufweist. Ein in Bandform auf einem Coil bereit gestelltes Stahlband aus einer härtbaren Stahllegierung wird vom Coil abgezogen und in einer Laserschneidstation lasertechnisch in Platinen geteilt und hierbei randseitig beschnitten. Anschließend werden in den Platinen in einer Stanzvorrichtung Löchern durch Stanzen hergestellt. Die Platinen werden dann in eine Heizvorrichtung überführt und auf eine Temperatur oberhalb der spezifischen Austenitisierungstemperatur der Stahllegierung erwärmt, worauf die Platinen in einem Formwerkzeug zum Formbauteil geformt und die Formbauteile zumindest partielles gehärtet werden.

## Beschreibung

Die Erfindung betrifft ein Verfahren zur Herstellung eines zumindest partiell gehärteten Kraftfahrzeug-Formbauteils.

Bei Kraftfahrzeug-Formbauteilen der vorliegend in Rede stehenden Art handelt es sich insbesondere um Karosserie- oder Strukturbauteile von Kraftfahrzeugen wie A-, B-, oder C-Säulen, Schweller, Stoßfängerquerträger oder Seitenaufprallträger und ähnliche crashrelevante Formbauteile. Die Kraftfahrzeug-Formbauteile weisen einen aus einem Stahlblech geformten Basiskörper auf. Solche Kraftfahrzeug-Formbauteile unterliegen höchsten Anforderungen im Hinblick an ihre Festigkeit, so dass zu deren Herstellung hoch-, höher- und höchstfeste Stähle verwendet werden, insbesondere Mangan-Bor-Stähle. In diesem Zusammenhang zählt das Formhärten zum Stand der Technik. Formhärten ist ein Verfahren zum Warmumformen von Blechen, welches auch als Presshärten bezeichnet wird. Beim Formhärten wird ein Blech aus einer Mangan-Bor-Stahllegierung auf eine Temperatur oberhalb der spezifischen Austenitisierungstemperatur des Werkstoffs erwärmt, in ein Formwerkzeug eingelegt und zum Formbauteil warm umgeformt, wobei es während der Formgebung abkühlt. Im Formwerkzeug eingespannt werden die Formbauteile durch die Kühlung gehärtet. Solche Formbauteile zeichnen sich durch ihre hohen Festigkeitswerte aus. Insbesondere bei Formbauteilen aus Mangan-Bor-Stahlblechen lassen sich Festigkeiten über 1.200 MPa, insbesondere im Bereich von 1.300 MPa bis zu 2.000 MPa durch Formhärten erreichen.

Das Einbringen von Löchern in die Ausgangsplatinen vor dem Warmumformen und Presshärten ist grundsätzlich bekannt.

Durch die DE 10 2013 214 250 A1 zählt ein Blechbauteil aus einem pressgehärteten Stahlblechmaterial, insbesondere für ein Kraftfahrzeug, sowie ein Verfahren zu dessen Herstellung zum Stand der Technik. Das Blechbauteil weist wenigstens einen gelochten Bauteilbereich auf, der mehrere nach einem vorgegebenen Muster angeordnete Durchgangslöcher umfasst, wobei es sich bei dem gelochten Bauteilbereich um einen bei Bauteilbelastung unbeanspruchten, nur gering beanspruchten oder gezielt zu deformierenden Bauteilbereich handelt. Zur Herstellung eines solchen Blechbauteils wird ein Stahlblechmaterial verwendet, das beim Einlegen in ein Formwerkzeug bereits in wenigstens einem Werkstückbereich gelocht ist.

Problematisch ist der hohe Aufwand für einen scherschneidtechnischen Platinenschnitt sowie eine spanende Bearbeitung.

Der Erfindung liegt die Aufgabe zu Grunde, ein Verfahren zur Herstellung von mit Löchern versehenen und zumindest partiell gehärteten Kraftfahrzeug-Formbauteilen zu verbessern und die Qualität der hergestellten Kraftfahrzeug-Formbauteile zu steigern.

Die Lösung dieser Aufgabe besteht nach der Erfindung in einem Verfahren gemäß Anspruch 1.

Vorteilhafte Ausgestaltungen und Weiterbildungen des erfindungsgemäßen Verfahrens zeigen die abhängigen Ansprüche auf.

Ein erfindungsgemäßes Verfahren zur Herstellung eines Löcher aufweisendes und zumindest partiell gehärteten Kraftfahrzeug-Formbauteils aus einer Platine aus einer härtbaren Stahllegierung sieht folgende Verfahrensschritte vor:
- ein in Bandform auf einem Coil bereit gestelltes Stahlband aus einer härtbaren Stahllegierung wird vom Coil abgezogen und in einer Laserschneidstation mittels Laserschneiden in Platinen geteilt und hierbei randseitig beschnitten,
- Überführen der einzelnen Platinen in eine Stanzvorrichtung,
- Herstellen von Löchern in einer Platine durch Stanzen in der Stanzvorrichtung,
- Überführen der gelochten Platine in eine Heizvorrichtung und Erwärmen der Platine auf eine Temperatur oberhalb der spezifischen Austenitisierungstemperatur der Stahllegierung,
- Überführen der erwärmten Platine in ein Formwerkzeug, Formen der Platine zum Formbauteil und zumindest partielles Härten des Formbauteils im Formwerkzeug.

Das Formbauteil kann vollständig gehärtet werden. Im Rahmen der Erfindung ist es auch möglich, die Presshärtung beim erfindungsgemäßen Verfahren so durchzuführen, dass am umgeformten und pressgehärteten Formbauteil Bereiche mit unterschiedlichen Festigkeiten entstehen. Dies kann durch eine geeignete Temperatursteuerung der Presshärtung erfolgen, beispielsweise in einem Formwerkzeug, in dem Zonen mit unterschiedlichen Abkühlgradienten vorgesehen sind.

Ein wesentlicher Aspekt der Erfindung ist die lasertechnische Herstellung der Platinen aus dem in Bandform bereitgestellten Stahlband aus einer härtbaren Stahllegierung. Insbesondere die Kombination des lasertechnischen Platinenschneidens mit dem mechanischen Stanzen der Löcher in einer Lochstanzstation im kalten Zustand ergibt einen verfahrenstechnisch synergistischen Vorteil.

Bei der härtbaren Stahllegierung handelt es sich um einen Mangan-Bor-Stahl. Das Stahlband kann mit einer Vorbeschichtung auf Aluminium-Silizium-Basis oder einer Zinkvorbeschichtung versehen sein. Möglich ist auch, dass ein Stahlband verwendet wird, welches mit einem mehrlagigen metallischen Beschichtungssystem versehen ist.

Praktische Versuche haben ergeben, dass die erfindungsgemäße Vorgehensweise eine sehr hohe gleichmäßige Lochrandqualität ergibt im Vergleich zu einer lasertechnischen Herstellung der Löcher. Auch ist die Lochstanzstation bzw. Stanzvorrichtung konstruktiv einfach, wenig komplex und hat mehr Freiheitsgrade hinsichtlich Lochabstand und Lochanzahl im Vergleich zu Warmlochen im Formwerkzeug. Des Weiteren ist, insbesondere bei einem Kragenausformen an einem oder mehreren der Löcher, die Rissgefahr gegenüber einem gelaserten Vorloch reduziert. Gegenüber einem nachträglichen Laserrandbeschnitt ergibt sich durch den erfindungsgemäßen Platinenschnitt zudem der Vorteil, dass der Beschnittrand gleichmäßigere mechanische Eigenschaften aufweist.

Der Zeitpunkt des Einbringens der Löcher in die Platine erfolgt nach deren Abteilen vom Coil eines Stahlbandes. Das Eindringen der Löcher selber erfolgt in einer Stanzvorrichtung durch Stanzen. Hierbei werden alle Löcher oder alle Löcher von einem oder mehreren Lochmustern in der Platine gefertigt.

Es kann ein aus mehreren Löchern bestehendes Lochmuster gestanzt werden. Es können auch verteilt in der Platine einzelne Löcher gestanzt werden, denen am fertigen Kraftfahrzeug-Formbauteil unterschiedliche Funktionen zukommt. Es werden insbesondere wenigstens fünf Löcher erzeugt.

Die Anordnung der Löcher bzw. des Lochmusters in einer Platine, ebenso wie deren Geometrie und Anordnung zueinander erfolgt in Anpassung auf das zu fertigende Kraftfahrzeug-Formbauteil und die Funktionen, die den einzelnen Löchern oder dem Lochmuster zukommt.

Beim Lochen in der Stanzvorrichtung können die Platinen lokal vorgeformt und/oder mit einer Verprägung versehen werden. Eine Verprägung kann insbesondere eine gedrückte Stufe mit einer definierten Form sein. Solche Verprägungen dienen zur Versteifung des Formbauteils oder übernehmen Abstands- und/oder Haltefunktionen.

Eine vorteilhafte Ausgestaltung des erfindungsgemäßen Verfahrens sieht vor, dass beim Teilen des Stahlbandes in der Laserschneidstation Platinen geschnitten werden, deren Geometrie im Wesentlichen der Abwicklung des fertig geformten Kraftfahrzeug-Formbauteils entspricht. Dies ist besonders rationell und minimiert randseitige Beschnittvorgänge am fertigen Formbauteil. Die Geometrie der in der Laserschneidstation konfektionierten Platinen entspricht der Abwicklung des fertigen Formbauteils unter Berücksichtigung von geometrischen Veränderungen am Bauteil durch den Umform- und Härtevorgang.

Beim Härten im Formwerkzeug wird im gesamten Formbauteil oder zumindest in einem Bereich des Formbauteils, insbesondere in einem mit Löchern oder einem mit einem Lochmuster versehenen Flächenabschnitt eine Zugfestigkeit Rm von größer oder gleich (≥) 1.250 MPa bis 2.100 MPa eingestellt.

Des Weiteren kann beim Härten des Formbauteils im Formwerkzeug zumindest in einem Flächenabschnitt eine Bruchdehnung A50 größer 4,5 % eingestellt werden. Insbesondere beträgt die Bruchdehnung A50 größer 6 % und liegt vorzugsweise jeweils einschließlich zwischen 6 % und 8 %.

Möglich ist es auch im Kraftfahrzeug-Formbauteil Flächenabschnitte mit voneinander verschiedenen Zugfestigkeiten und/oder Bruchdehnungen vorzusehen. Dies erfolgt vorzugsweise durch eine entsprechende Steuerung des Härtevorgangs beim Formhärten.

Erfindungsgemäß erfolgt das Lochen der Platinen in einem Zusatzprozess in der Stanzvorrichtung vor dem Warmumformen und Presshärten. Das Einbringen im Zusatzprozess ist wesentlich flexibler als ein Einbringen der Löcher im warmen Zustand im Formwerkzeug. Zudem ist es effektiver als ein Einbringen durch Laserschneiden beim Platinenschnitt. Auch ist die Kontrolle auf Vorhandensein aller Löcher mit weniger Aufwand möglich. Die Löcher und/oder ein Lochmuster kann flexibel rationell hergestellt und auch variiert werden. Es ist nur ein geringer Kontroll- und Änderungsaufwand nötig. Besonders vorteilhaft ist, dass durch das erfindungsgemäße vorgesehene Scherschneiden in der Stanzvorrichtung auch sehr geringe Lochabstände realisierbar sind.

Eine weitere vorteilhafte Ausgestaltung des erfindungsgemäßen Verfahrens sieht vor, dass die Platinen nach dem Herstellen der Löcher in der Stanzstation lokal mit Patches gefügt werden. Patches sind zusätzliche Stahlbleche, die vor dem Erwärmen und Umformen auf die Platine aufgebracht und mit dieser gefügt werden. Durch die Patches erfolgt eine punkt- bzw. bereichsgenaue Erhöhung der Festigkeit am fertigen Kraftfahrzeug-Formbauteil. Auf das Anbringen zusätzlicher Verstärkungsbleche am späteren Formbauteil kann verzichtet werden. Dies führt zu einer weiteren Effizienzsteigerung, einer Reduktion der Teileanzahl, eine Verkürzung der Produktionszeit und erspart Kosten.

Im Rahmen der Erfindung können anstelle einer gepatchten Platine auch lasergeschweißte Platinen, sogenannte Tailored Welded Blanks oder flexibel gewalzte Bänder bzw. Tailored Rolled Blanks aufweisend unterschiedliche maßgeschneiderte Blechstärken verwendet werden.

Das Herstellen von Löchern wird vorzugsweise unmittelbar vor dem Überführen der Platinen in die Heizvorrichtung durchgeführt. Dies erfolgt insbesondere taktverknüpft, also in einem aufeinander abgestimmten Takt zwischen der Laserschneidstation und der Stanzvorrichtung und/oder der Heizvorrichtung.

Eine Ausführungsform des Verfahrens sieht vor, dass die Platinen nach dem Erwärmen auf Austenitisierungstemperatur oberhalb des Ac3-Umwandlungspunktes innerhalt einer Zeit von bis zu 60 s homogen oder bereichsweise, insbesondere abschnittsweise, auf eine Zwischenkühltemperatur von 450°C bis 650°C zwischengekühlt werden.

Nach dem Zwischenkühlen kann die Platine zumindest in einem Bereich innerhalb einer Zeit von bis zu 60 s wieder auf eine Temperatur größer oder gleich (≥) des Ac3-Umwandlungspunkts erwärmt werden, während ein anderer Bereich der Platine auf einer Temperatur kleiner oder gleich (≤) des Ac1-Umwandlungspunkts gehalten und/oder erwärmt wird.

Bei den erfindungsgemäßen Kraftfahrzeug-Formbauteilen handelt es sich insbesondere um Karosserie- oder Strukturbauteile von Kraftfahrzeugen die einen, zumindest bereichsweise, warmumgeformten und gehärteten Basiskörper besitzen. Am formgehärteten Basiskörper können weitere Bauteilkomponenten später gefügt oder angebaut sein.

Die Erfindung bezieht sich insbesondere auf die Herstellung von Kraftfahrzeug-Formbauteilen wie A-, B- oder C-Säulen, Schweller, Stoßfängerquerträger, Seiten- und/oder Türaufbauträger sowie Dachrahmen, Längsträger, Tunnel und auch Querlenker.

Die scherschneidtechnische Herstellung der einzelnen Löcher und/oder der ein Lochmuster bildenden Löcher in der Stanzvorrichtung erfolgt abgestimmt auf das spätere Kraftfahrzeug-Formbauteil und die Funktionen der Löcher und/oder eines Lochmusters im Formbauteil.

Vor dem Formhärten bzw. nach der Formgebung kann die Steifigkeit des Basiskörpers lokal durch ein Verstärkungsblech oder Kunststoffeinsätze weiter verbessert werden.

Das erfindungsgemäße Verfahren führt dazu, dass die Summe der Belegungszeiten für den Platinenschnitt in der Laserschneideinrichtung und das Einbringen der Löcher in der Stanzvorrichtung deutlich niedriger ist als die Summe der Belegungszeit bzw. -zeiten von ein oder mehreren Laseranlagen zur Herstellung für dieselbe Plattengeometrie. Insbesondere konnte eine Verringerung der Belegungszeit um 20% und sogar mehr festgestellt werden. Diese Verfahrensverbesserung resultiert insbesondere daraus, dass in der mechanischen Stanzvorrichtung gleichzeitig eine große Anzahl von Löchern gestanzt werden können in einer kurzen Stanzzeit, die unabhängig von der Lochanzahl gering ist. Demgegenüber ist ein Lochen per Laser deutlich zeitaufwändiger.

Es kann eine Gewichtsverbesserung bzw. -reduzierung der Kraftfahrzeug-Formbauteile erreicht werden, und zwar durch die Löcher selber. Es ist auch möglich, Stege zwischen einzelnen Löchern im Lochmuster zu entfernen.

Die erfindungsgemäß hergestellten Kraftfahrzeug-Formbauteile sind qualitativ verbessert.

Die Erfindung ist nachfolgend noch anhand von Fließbildern näher und ergänzend beschrieben und dargestellt. Es zeigen:
- Figur 1: ein erstes Verfahrensfließschema;
- Figur 2: ein zweites Verfahrensfließschema und
- Figur 3: ein drittes Verfahrensfließschema.

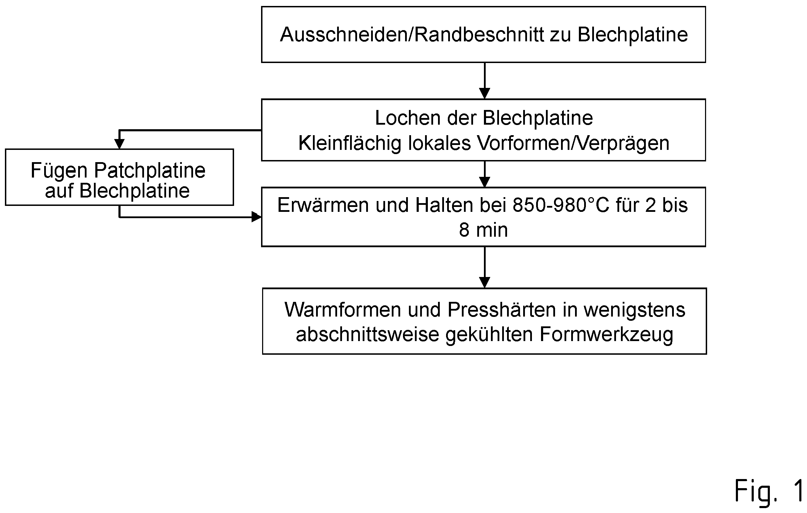

In den Figuren 1 bis 3 ist das Fließschema des erfindungsgemäßen Verfahrens und Abwandlungen bzw. vorteilhafte Ausgestaltungen hiervon dargestellt.

Allen Verfahrensabläufen ist gemein, dass ein Stahlband aus einer härtbaren Mangan-Bor-Stahllegierung in einer Laserschneidstation mittels Laserschneiden in Platinen geteilt und hierbei randseitig beschnitten wird. Beim lasertechnischen Zuschnitt der Platinen werden diese geometrisch auf das zu formende Formbauteil abgestimmt. Die Platinen können im Wesentlichen der Abwicklung des fertig geformten Formbauteils entsprechen oder aber Materialbevorratungen für Verprägungen wie Stufen oder Sickungen aufweisen.

Die Platinen werden dann in eine Stanzvorrichtung überführt, wo in den Platinen Löcher hergestellt werden. Dies erfolgt mechanisch durch Stanzen in der Stanzvorrichtung. Hierbei werden vorzugsweise in einem Hub mehrere Löcher oder auch ein Lochbild aus einer Vielzahl zusammengehöriger Löcher gebildet. Bevorzugt erfolgt unmittelbar im Anschluss an das Laserschneiden das Überführen in die Stanzvorrichtung, d.h. Lochen und Schneiden erfolgen taktverkettet.

Im Zuge des Stanzvorganges können die Platinen zeitparallel zum Lochen in der Stanzvorrichtung lokal vorgeformt und/oder mit Verprägungen versehen werden. Von der Stanzvorrichtung oder einer eventuellen Zwischenlagerung werden die gelochten Platinen in eine Heizvorrichtung überführt und auf eine Temperatur oberhalb der spezifischen Austenitisierungstemperatur, d. h. auf eine Temperatur größer oder gleich (≥) des Ac3-Umwandlungspunktes der Stahllegierung erwärmt.

Das Erwärmen und ein anschließendes Halten auf bzw. bei einer Temperatur von 850°C bis 950°C erfolgt in einem Zeitraum von 2 bis 8 min.

Im Anschluss an den Erwärmungs- und Halteprozess werden die erwärmten Platinen in ein Formwerkzeug überführt und dort zum Formbauteil warmgeformt und zumindest partiell pressgehärtet. Dies erfolgt in einem wenigstens abschnittsweise gekühlten Formwerkzeug.

Der Verfahrensablauf, wie in Figur 1 dargestellt, verdeutlicht, dass zwischen dem Lochen der Blechplatinen in der Stanzvorrichtung und der Erwärmung die einzelnen Platinen mit Patches, also lokal aufgebrachten kleineren Blechen, versehen werden können.

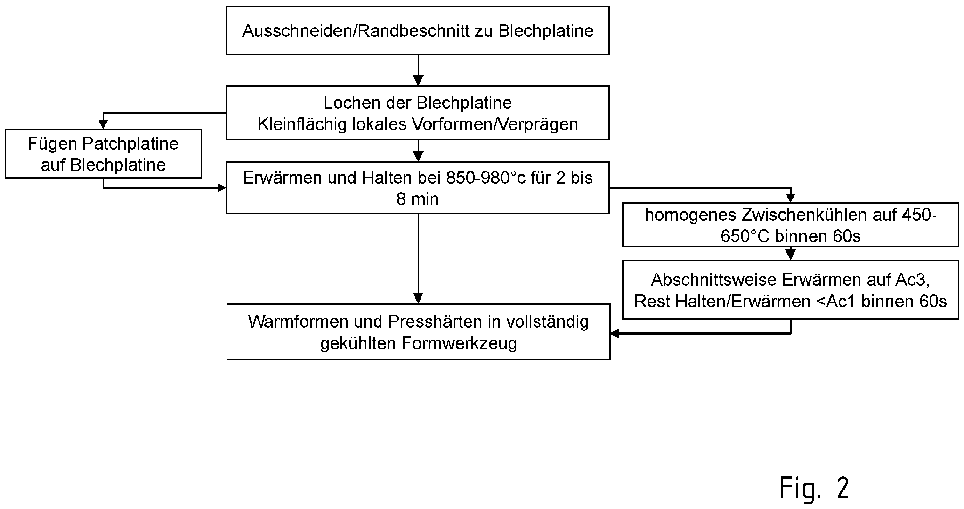

Bei dem Verfahrensablauf, wie in Figur 2 dargestellt, erfolgt optional nach dem Erwärmen auf Austenitisierungstemperatur oberhalb Ac3 ein homogenes Zwischenkühlen auf eine Zwischenkühltemperatur von 450°C bis 650°C. Hieran schließt sich ein abschnittsweises Erwärmen auf eine Temperatur oberhalb Ac3 an, während andere Abschnitte der Platine auf eine Temperatur kleiner gleich (≤) des Ac1-Umwandlungspunktes gehalten oder erwärmt werden. Nach dieser zusätzlichen Wärmebehandlung werden die Platinen in das Formwerkzeug überführt. Das Formwerkzeug ist vollständig gekühlt. Es erfolgt ein Warmformen und Presshärten in dem vollständig gekühlten Formwerkzeug.

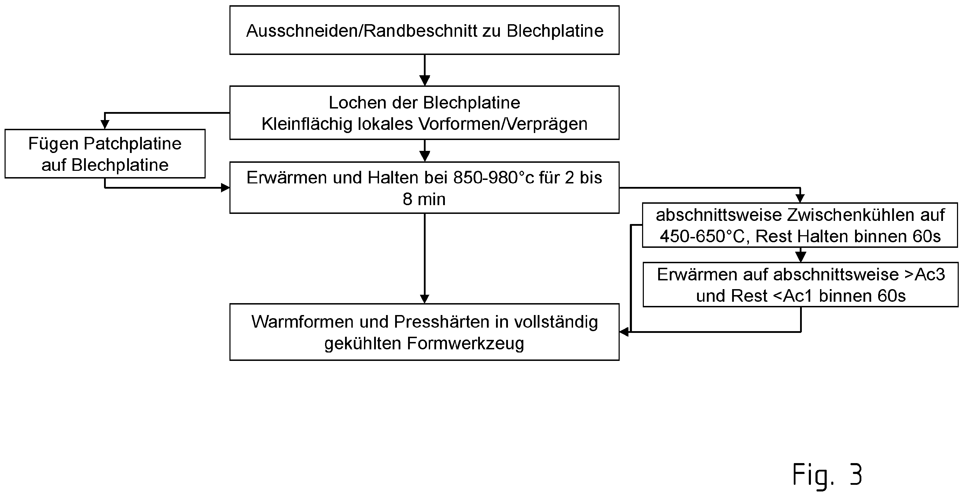

Bei dem in der Figur 3 dargestellten Verfahrensablauf werden die Platinen nach dem Erwärmen und Halten auf Austenitisierungstemperatur in einem Temperaturbereich zwischen 850°C und 980°C für 2 bis 8 min. im Anschluss abschnittsweise zwischengekühlt auf eine Zwischenkühltemperatur von 450°C bis 650°C. Die Zwischenkühltemperatur wird für einen Zeitraum von 60 s gehalten. Die restlichen Abschnitte der Platine werden auf bzw. im Wesentlichen auf der Austenitisierungstemperatur gehalten.

Im Anschluss daran können die zwischengekühlten Platinen in das Formwerkzeug überführt werden und dort in dem vollständig gekühlten Formwerkzeug warmgeformt und pressgehärtet werden.

Alternativ können die zwischengekühlten Platinen auch in einem nächsten Schritt abschnittsweise auf eine Temperatur oberhalb des Ac3-Umwandlungspunktes erwärmt werden, wohingegen andere Bereich auf eine Temperatur kleiner des Ac1-Umwandlungspunktes gehalten werden. Diese Zwischenoperation erfolgt in einem Zeitraum von bis zu 6 s.

Im Anschluss daran werden die derart modifiziert erwärmten bzw. temperierten Platinen in ein vollständig gekühltes Formwerkzeug überführt und dort warmgeformt sowie pressgehärtet.

Als Ergebnis einer abschnittsweisen unterschiedlichen Erwärmung, abschnittsweisen Zwischenkühlung oder nur abschnittsweisen Kühlung im Formwerkzeug gemäß den in den Figuren 1 bis 3 dargestellten Verfahrensabläufen ergeben sich maßgeschneiderte nur abschnittsweise gehärtete Bauteile mit zusätzlich duktileren, weichen Zonen.

## Patentansprüche

1. Verfahren zur Herstellung eines zumindest partiell gehärteten Kraftfahrzeug-Formbauteils aus einer Platine aus einer härtbaren Stahllegierung, wobei das Kraftfahrzeug-Formbauteil mehrere Löcher aufweist, **gekennzeichnet durch** folgende Verfahrensschritte:
- ein in Bandform auf einem Coil bereit gestelltes Stahlband aus einer härtbaren Stahllegierung wird vom Coil abgezogen und in einer Laserschneidstation mittels Laserschneiden in Platinen geteilt und randseitig beschnitten,
- Überführen der einzelnen Platinen in eine Stanzvorrichtung,
- Herstellen von Löchern in der Platinen durch Stanzen in der Stanzvorrichtung,
- Überführen der gelochten Platine in eine Heizvorrichtung und Erwärmen der Platine auf eine Temperatur oberhalb der spezifischen Austenitisierungstemperatur der Stahllegierung,
- Überführen der erwärmten Platine in ein Formwerkzeug,
- Formen der Platine zum Formbauteil und zumindest partielles Härten des Formbauteils im Formwerkzeug.

2. Verfahren nach Anspruch 1, **dadurch gekennzeichnet, dass** das Lochen und Schneiden unmittelbar nacheinander durchgeführt werden, insbesondere taktverkettet durchgeführt werden.

3. Verfahren nach Anspruch 1 oder 2, **dadurch gekennzeichnet, dass** die Platine nach dem Herstellen der Löcher lokal mit Patches gefügt werden.

4. Verfahren nach einem der Ansprüche 1 bis 3, **dadurch gekennzeichnet, dass** die Platine nach dem Erwärmen auf Austenitisierungstemperatur innerhalb einer Zeit von bis zu 60 s homogen auf eine Zwischenkühltemperatur von 450 °C bis 650 °C zwischengekühlt wird.

5. Verfahren nach einem der Ansprüche 1 bis 3, **dadurch gekennzeichnet, dass** die Platine nach dem Erwärmen auf Austenitisierungstemperatur innerhalb einer Zeit von bis zu 60 s bereichsweise auf eine Zwischenkühltemperatur von 450 °C bis 650 °C zwischengekühlt wird.

6. Verfahren nach Anspruch 4 oder 5, **dadurch gekennzeichnet, dass** die Platine nach dem Zwischenkühlen zumindest in einem Bereich innerhalb einer Zeit von bis zu 60 s wieder auf eine Temperatur größer oder gleich (≥) des Ac3-Umwandlungspukts erwärmt wird, während ein anderer Bereich der Platine auf einer Temperatur kleiner oder gleich (≤) des Ac1-Umwandlungspunks gehalten und/oder erwärmt wird.

7. Verfahren nach einem der Ansprüche 1 bis 6, **dadurch gekennzeichnet, dass** in jeder Platine wenigstens fünf Löcher erzeugt werden.

8. Verfahren nach einem der Ansprüche 1 bis 7, **dadurch gekennzeichnet, dass** beim Teilen des Stahlbands in der Laserschneidstation Platinen geschnitten werden, deren Geometrie im Wesentlichen der Abwicklung des fertig geformten Formbauteils entspricht.

9. Verfahren nach einem der Ansprüche 1 bis 8, **dadurch gekennzeichnet, dass** die Platine beim Lochen in der Stanzvorrichtung lokal vorgeformt wird und/oder mit einer Verprägung versehen wird.

10. Verfahren nach einem der Ansprüche 1 bis 9, **dadurch gekennzeichnet, dass** das Herstellen der Löcher unmittelbar vor dem Überführen in die Heizvorrichtung durchgeführt wird, insbesondere taktverknüpft.
